# EUROPÄISCHE PATENTSCHRIFT

(11) **EP 3 615 387 B1**
(45) Veröffentlichungstag und Bekanntmachung des Hinweises auf die Patenterteilung: **17.03.2021**
(21) Anmeldenummer: 18715689.8
(22) Anmeldetag: 04.04.2018
(51) Int. Cl.: B60R 21/264, F42B 3/26, F42B 3/107

(54) **ANZÜNDERTRÄGER, BAUGRUPPE, GASGENERATOR SOWIE VERFAHREN ZUR HERSTELLUNG EINES GASGENERATORS**
IGNITOR HOLDER, ASSEMBLY, GAS GENERATOR AND METHOD FOR MANUFCATURING A GAS GENERATOR
SUPPORT D'ALLUMEUR, MODULE, GÉNÉRATEUR DE GAZ AINSI QUE PROCÉDÉ DE FABRICATION D'UN GÉNÉRATEUR DE GAZ

(30) Priorität: 28.04.2017 DE 102017109208
(43) Veröffentlichungstag der Anmeldung: 04.03.2020
(73) Patentinhaber: ZF Airbag Germany GmbH, 84544 Aschau a. Inn (DE)
(72) Erfinder: KNOLLHUBER, Christian, 84427 St. Wolfgang (DE); ESAU, Anja, 84453 Mühldorf am Inn (DE); DESIREE, Koller, 84494 Lohkirchen (DE)
(74) Vertreter: ZF Patentabteilung - DIPS
(86) Internationale Anmeldenummer: PCT/EP2018/058577
(87) Internationale Veröffentlichungsnummer: WO 2018/197167

(56) Entgegenhaltungen:
- WO-A1-2014/044830
- WO-A1-2016/093946
- DE-A1-102009 023 593

## Beschreibung

Die Erfindung betrifft einen Anzünderträger für eine Anzündereinheit eines Gasgenerators sowie eine Baugruppe umfassend eine Anzündereinheit und einen Anzünderträger. Zudem betrifft die Erfindung einen Gasgenerator mit einer derartigen Baugruppe sowie ein Verfahren zur Herstellung eines Gasgenerators.

In einem Kraftfahrzeug werden Gasgeneratoren beispielsweise eingesetzt, um das für einen Gassack eines Gassackmoduls benötigte Aufblasgas in kurzer Zeit bereitzustellen, sofern eine Steuereinheit ein Signal zu einer Aktivierung bzw. Auslösung des Gasgenerators ausgibt. Gasgeneratoren weisen hierzu üblicherweise eine Anzündereinheit auf, die mit der Steuereinheit des Kraftfahrzeugs oder des Gassackmoduls verbunden wird, sodass sich ein Anzünder der Anzündereinheit entsprechend ansteuern lässt. Die Verbindung erfolgt in der Regel über ein Kabel mit einem Stecker, der in eine Steckerbuchse der Anzündereinheit eingesteckt wird. Die Steckerbuchse wird auch als Retainer bezeichnet wird.

Zur Aufnahme der Anzündereinheit bzw. des Anzünders am Gasgenerator kann ferner ein Anzünderträger vorgesehen sein, der eine Schnittstelle zwischen dem Gasgeneratorgehäuse eines Gasgenerators und der Anzündereinheit darstellt. Je nach Ausbildung des Anzünderträgers lassen sich verschiedene Typen von Anzündereinheiten beim Gasgenerator verwenden. Der Anzünderträger ist üblicherweise an einem Ende des Gasgeneratorgehäuses angeordnet, sodass er eine durch das Gasgeneratorgehäuse gebildete Brennkammer, welche einen Treibstoff umfassen kann, abdichtet, wobei zumindest ein Teil des Aufblasgases für den Gassack durch einen Abbrand des Treibstoffes gebildet werden kann.

Die zur Ansteuerung der Anzündereinheit verwendeten Stecker können Massekontakte aufweisen, die mit dem Gasgeneratorgehäuse elektrisch verbunden werden, um das Gasgeneratorgehäuse zu erden bzw. einen elektrischen Potenzialausgleich zu schaffen, indem das Gasgeneratorgehäuse beispielsweise auf dasselbe elektrische Potenzial gebracht wird, welches eine Karosserie des Kraftfahrzeugs hat, in dem der Gasgenerator eingebaut ist.

Die Druckschrift WO 2014/044830 A1 offenbart einen Anzünderträger für eine Anzündereinheit eines Gasgenerators nach dem Oberbegriff der Anspruchs 1, mit einem ersten Halterelement aus einem ersten Werkstoff und einem zweiten Halterelement aus einem zweiten, zum ersten Werkstoff unterschiedlichen Werkstoff, wobei beide Halterelemente formschlüssig miteinander koppelbar sind.

An einem derartigen bekannten Anzünderträger ist von Nachteil, dass sich die beiden Halterelemente gegeneinander durch eine Rotationsbewegung verdrehen lassen. Anders ausgedrückt, ist eine unvorteilhafte Relativbewegung der beiden Halterelemente, insbesondere entlang ihres Umfangs an ihren aneinander anliegenden Kontaktflächen zueinander möglich.

Die Aufgabe der Erfindung ist es vorgenannten Nachteil zu vermeiden bzw. einen Anzünderträger zu schaffen, der eine wohldefinierte Position für eine Anzündereinheit ermöglicht.

Die Aufgabe wird erfindungsgemäß durch einen Anzünderträger mit den Merkmalen des Patentanspruchs 1 gelöst.

Ferner wird die Aufgabe der Erfindung durch eine Baugruppe gelöst, die einen Anzünderträger der zuvor genannten Art und eine Anzündereinheit umfasst.

Des Weiteren stellt die Erfindung einen Gasgenerator bereit, mit einer Baugruppe der zuvor genannten Art, wobei ein, insbesondere rohrförmiges, Gasgeneratorgehäuse vorgesehen ist, in dem die Baugruppe zumindest teilweise aufgenommen ist.

Der Grundgedanke der Erfindung ist es, dass das erste Halterelement eine axiale Kontaktfläche für das zweite Halterelement an einer Stirnseite aufweist, die dem zweiten Halterelement zugeordnet ist und, dass das zweite Halterelement axial vorstehende Vorsprünge aufweist, wobei die Vorsprünge eine axiale Druckfläche haben, über die sie mit der axialen Kontaktfläche des ersten Halterelements zusammenwirken, wobei das erste Halterelement an der Stirnseite, die dem zweiten Halterelement zugeordnet ist, axial vorstehende Nasen aufweist, und wobei die Vorsprünge und die Nasen in Umfangsrichtung vorgesehene Anlageflächen zur Orientierung der Halterelemente aufweisen.

Die axiale Kontaktfläche des ersten Halterelements dient demnach für den Formschluss in axialer Richtung. Die Kontaktfläche des ersten Halterelements wirkt entsprechend mit der am zweiten Halterelement ausgebildeten Druckfläche zusammen, die durch die Vorsprünge gebildet wird. Die Vorsprünge erstrecken sich von einer Stirnseite des zweiten Halterelements ausgehend in axialer Richtung, wobei die Stirnseite im zusammengesetzten Zustand mit dem ersten Halterelement dem ersten Halterelement zugewandt ist. Wenn das erste Halterelement aus einem Metall gebildet ist, können die Nasen des ersten Halterelements zu einer elektrischen Verbindung dienen. Zudem können die Nasen nach radial innen gerichtete Zentrierungsflächen aufweisen, die zur Zentrierung einer Steckerbuchse (Retainer) der Anzündereinheit dienen, in die der Stecker eingesetzt wird. Diese Zentrierungsflächen können jeweils Teilflächen eines Zylindermantels sein, insbesondere eines gemeinsamen Zylindermantels. Die axial vorstehenden Nasen wirken mit ihren, dem zweiten Halterelement zugewandten Oberflächen mit dem zweiten Halterelement zusammen, um einen Formschluss in axialer Richtung auszubilden. Über die Vorsprünge und Nasen greifen die beiden Halterelemente klauenartig ineinander, wodurch sich in einfacher Weise die Formschlussverbindung in Umfangsrichtung ergibt. Die Vorsprünge und die Nasen liegen über ihre Anlageflächen jeweils aneinander an, sodass eine Relativdrehung der beiden Halterelemente im Wesentlichen verhindert ist.

Insbesondere können die Nasen rampenartig ausgebildet sein, sodass sie von radial außen nach radial innen in Richtung dem zweiten Halterelement ansteigend sind.

Das Gasgeneratorgehäuse und das Halterelement aus Metall können aus demselben Materialtyp gebildet sein. Insofern kann dieses Halterelement aus Metall kostengünstig über eine Schweißverbindung mit dem Gasgeneratorgehäuse verbunden werden. Des Weiteren lässt sich der gesamte Anzünderträger kostengünstig herstellen, da das aus Metall gebildete Halterelement spanlos herstellbar ist, beispielsweise durch Fließpressen oder Extrudieren. Dieses Halterelement ist demnach ein werkzeugfallendes Bauteil.

Die formschlüssige Verbindung der beiden Halterelemente gewährleistet ferner, dass sich die Halterelemente in gewünschter Weise zueinander ausrichten und verdrehsicher in einem Gasgeneratorgehäuse aufgenommen werden können. Die beiden Halterelemente müssen demnach nicht zunächst miteinander verbunden werden, bevor sie in das Gasgeneratorgehäuse eingebracht werden, da sie in einfacher Weise aufeinander gesetzt bzw. zusammengesetzt werden. Dies vereinfacht die Montage des Anzünderträgers am Gasgeneratorgehäuse, da der Montageschritt eingespart werden kann, bei dem separate Halterelemente zunächst miteinander verbunden werden, beispielsweise miteinander verschweißt werden müssten. Die Halterelemente können also derart ausgebildet sein, dass sie sich sozusagen selbsttätig in gewünschter Weise zueinander ausrichten, wenn sie zusammengesetzt bzw. ineinander gesteckt werden.

Es ist möglich, dass das erste Halterelement aus einem, insbesondere elektrisch leitfähigen, Metall gebildet und mit der Anzündereinheit, insbesondere einem Anzünder davon, zu einer vorgefertigten Montagegruppe zusammenbaubar ist. Das zweite Halterelement kann aus einem Kunststoff ausgebildet sein. Hierbei kann der Anzünder, der selbst ein vorgefertigtes Bauteil sein kann und ein Bestandteil der Anzündereinheit darstellt in das erste Halterelement eingesetzt und an bzw. in diesem befestigt werden, um die vorgefertigte Montagegruppe zu bilden, welche ihrerseits in das Generatorgehäuse eingesetzt und mit diesem verbunden, insbesondere verschweißt, werden kann. Danach kann das zweite Halterelement aus Kunststoff formschlüssig mit dem ersten Halterelement gekoppelt werden.

Ein Aspekt sieht vor, dass beide Halterelemente in Umfangsrichtung und in radialer Richtung formschlüssig gekoppelt sind. Die beiden Halterelemente lassen sich folglich im zusammengesetzten Zustand im Wesentlichen nicht relativ zueinander verdrehen, auch wenn die Halterelemente noch nicht im Gasgeneratorgehäuse befestigt sind. Zudem kann vorgesehen sein, dass sie in radialer Richtung relativ zueinander fixiert sind, auch wenn die Halterelemente noch nicht im Gasgeneratorgehäuse eingesetzt und befestigt sind, sondern lediglich teilweise ineinander gesteckt sind.

Vorzugsweise weist das erste Halterelement vier Nasen auf, wovon drei Nasen hinsichtlich der Größe und Form in gleicher Weise ausgebildet sind. Dementsprechend ist eine der vier Nasen anders ausgebildet, beispielsweise größer, wodurch eine relative Orientierung der Halterelemente zueinander gewährleistet ist, insbesondere in Umfangsrichtung, da die Nasen mit dem zweiten Halterelement zusammenwirken. Die beiden Halterelemente nehmen also aufgrund der unterschiedlich ausgebildeten Nasen eine in Umfangsrichtung vordefinierte relative Lage ein, wenn die Halterelemente zusammengesetzt sind.

Das erste Halterelement kann einen Randbereich aufweisen, gegenüber dem die axiale Kontaktfläche zurückgesetzt ist, wobei das zweite Halterelement einen Außenrand aufweist, der gegenüber den Vorsprüngen zurückgesetzt ist. Im zusammengesetzten Zustand liegen die Halterelemente über den Randbereich und den Außenrand aneinander an, wobei die Vorsprünge vom Randbereich in radialer Richtung umgeben sind. Somit ergibt sich in einfacher Weise ein Formschluss der beiden Halterelemente in radialer Richtung.

Des Weiteren kann das zweite Halterelement zumindest ein radial außen angeordnetes, insbesondere hakenförmig ausgebildetes, Rastelement aufweisen, insbesondere wobei sich das Rastelement von einer Stirnseite des zweiten Halterelements aus erstreckt, die vom ersten Halterelement abgewandt ist. Über das Rastelement kann der Anzünderträger, insbesondere das zweite Halterelement, am Gasgeneratorgehäuse positionsgetreu (vor-)fixiert werden, da das Rastelement beispielsweise in eine im Gasgeneratorgehäuse vorgesehene Öffnung einrastet, sofern sich das zweite Halterelement in der vorgesehenen Position relativ zum Gasgeneratorgehäuse befindet. Da das zweite Halterelement aus einem Kunststoff besteht, ist das Rastelement einteilig mit dem Grundkörper des zweiten Halterelements ausgebildet, wobei die benötigte Elastizität des Rastelements aufgrund dessen Form und/oder des verwendeten Materials bereitgestellt wird.

Gemäß einem weiteren Aspekt weist das zweite Halterelement an dessen Innenseite einen Hinterschnitt für die Anzündereinheit, insbesondere für die Steckerbuchse, auf. Der Hinterschnitt kann zur Aufnahme der Steckerbuchse der Anzündereinheit dienen, wodurch diese ebenfalls in Bezug auf den Anzünderträger in der gewünschten Position lagefixiert ist.

Ein Aspekt sieht vor, dass das erste Halterelement zumindest bereichsweise umgeformt ist, sodass die Anzündereinheit bzw. der Anzünder vom ersten Halterelement zumindest teilweise aufgenommen ist. Beispielsweise ist der Anzünder der Anzündereinheit teilweise in das metallisch ausgebildete erste Halterelement gecrimpt oder gebördelt, wodurch der Anzünder in Bezug auf den Anzünderträger positionsfest ist.

Gemäß einem weiteren Aspekt weist die Anzündereinheit eine Steckerbuchse auf, die in das zweite Halterelement eingesetzt ist. Die Steckerbuchse stellt die übliche Steckerschnittstelle dar, bei der eine entsprechende Steck-Codierung vorgesehen ist. Üblicherweise ist die Steckerbuchse aus einem Kunststoff hergestellt, wobei ein Metalleinlegeteil vorgesehen ist, über das wenigstens eine Kurzschlussfeder sowie wenigstens ein Erdungselement in Form von einer Massekralle ausgebildet sein können. Die aus einem Kunststoff gebildete Steckerbuchse kann in dem aus einem Kunststoffmaterial hergestellten zweiten Halterelement als separates Bauteil eingesetzt sein. Vorzugsweise weist das zweite Halterelement eine universell ausgebildete Buchsenaufnahme auf, sodass sich unterschiedliche Steckerbuchsen einsetzen lassen.

Ferner kann vorgesehen sein, dass die Steckerbuchse in das zweite Halterelement eingespritzt bzw. direkt an dieses mit angespritzt ist. Die Steckerbuchse ist demnach im zweiten Halterelement mittels Spritzguss einstückig bzw. stoffschlüssig integriert. Folglich liegt lediglich ein einziges Kunststoffbauteil vor, welches gleichzeitig die Steckerbuchse der Anzündereinheit und das zweite Halterelement des Anzünderträgers ist.

Gemäß einem Aspekt weist das Gasgeneratorgehäuse wenigstens eine Anschlagsfläche für die Baugruppe, umfassend den Anzünderträger mit der darin aufgenommenen Anzündereinheit, auf. Die Anschlagsfläche stellt sicher, dass die beiden Halterelemente die vorgesehene Position in Bezug auf das Gasgeneratorgehäuse einnehmen, wenn die Baugruppe eingesetzt wird, insbesondere eingepresst wird. Es können zwei Anschlagsflächen vorgesehen sein, die an unterschiedlichen Stellen am Gasgeneratorgehäuse ausgebildet sind, wodurch sichergestellt ist, dass die Baugruppe in gewünschter Orientierung in das Gasgeneratorgehäuse eingesetzt ist. Der Anzünderträger, insbesondere das zweite Halterelement, weist dementsprechend korrespondierend ausgebildete Absätze auf, die radial abstehen und mit den entsprechenden Anschlagsflächen zusammenwirken.

Ferner kann das Gasgeneratorgehäuse in einem Endbereich zumindest eine Öffnung aufweisen, über die die Baugruppe am Gasgeneratorgehäuse lagefixiert ist, insbesondere wobei sich das Rastelement des zweiten Halterelements durch die Öffnung erstreckt. Die Öffnung im Gasgeneratorgehäuse stellt sicher, dass sich der Anzünderträger, insbesondere das zweite Halterelement mit dem Rastelement, am Gasgeneratorgehäuse in einfacher Weise (vor-)fixieren lässt, sodass es eine gewünschte Position im Gasgeneratorgehäuse einnimmt. Die Öffnung kann an einer Stelle des Gasgeneratorgehäuses vorgesehen sein, die im verbauten Zustand des Gasgenerators leicht einsehbar ist. Dadurch lässt sich leicht überprüfen, ob der Gasgenerator korrekt zusammengebaut wurde, insbesondere ob der Anzünderträger an der richtigen Position innerhalb des Gasgeneratorgehäuses ist, da sich das Rastelement dann durch die entsprechende Öffnung erstreckt. Die Überprüfung kann demnach optisch erfolgen, beispielsweise mittels einer Kamera in automatisierter Weise.

Es kann vorgesehen sein, dass zumindest das Rastelement eine Farbe aufweist, die sich von der Farbe des Gasgeneratorgehäuses abhebt, beispielsweise eine Signalfarbe, sodass der richtige Einbau des Anzünderträgers und somit der gesamten Baugruppe leicht überprüfbar ist.

Der Gasgenerator kann ein pyrotechnischer Gasgenerator, ein Hybridgasgenerator, ein Gurtstraffer oder ein Aktuator sein, insbesondere für einen Motorhaubenaufsteller oder einen Überrollbügel eines Fahrzeugs, wobei das Gasgeneratorgehäuse rohrförmig oder toroidförmig ist. Insofern lässt sich der Gasgenerator für verschiedene Zwecke einsetzen, beispielsweise als Teil einer Fahrzeuginsassenschutzvorrichtung, die ein Airbagmodul umfasst, oder als ein allgemeiner Aktuator, insbesondere zum Fußgängerschutz.

Die Erfindung stellt demnach auch eine Baugruppe bereit, die einen erfindungsgemäßen Anzünderträger und eine Anzündereinheit umfasst.

Hierbei kann bei der Baugruppe das erste Halterelement zumindest bereichsweise umgeformt sein, sodass die Anzündereinheit vom ersten Halterelement zumindest teilweise aufgenommen ist. Zusätzlich oder alternativ ist es möglich, dass die Anzündereinheit, insbesondere ein Anzünder davon, mit dem ersten Halterelement zumindest bereichsweise verklebt ist.

Außerdem kann bei der Baugruppe die Anzündereinheit eine Steckerbuchse umfassen, die in das zweite Halterelement eingesetzt ist oder die an das zweite Halterelement angespritzt ist, um mit diesem ein einstückiges Bauteil auszubilden. Vorzugsweise weist die Steckerbuchse dabei ein Erdungselement auf, welches das erste Halterlement elektrisch leitend kontaktiert.

Zudem ist folgendes Verfahren zur Herstellung eines Gasgenerators , insbesondere eines Gasgenerators der zuvor genannten Art, mit den folgenden Schritten möglich:
- Bereitstellen eines Gasgeneratorgehäuses,
- Bereitstellen einer Baugruppe der zuvor genannten Art,
- Einsetzen der Baugruppe in das Gasgeneratorgehäuse.

Wie bereits erläutert, kann die Baugruppe zunächst zusammengesetzt werden, indem beide Halterelemente aufeinander gesetzt und in das Gasgeneratorgehäuse eingesetzt werden. Alternativ können die beiden Halterelemente auch nacheinander und jeweils einzeln in das Gasgeneratorgehäuse eingesetzt werden, also zunächst das erste Halterelement und anschließend das zweite Halterelement. Aufgrund der Form der Halterelemente ist sichergestellt, dass diese sich dabei in gewünschter Weise zueinander ausrichten, insbesondere auch mit den Halterelementen gekoppelte Komponenten, beispielsweise Komponenten der Anzündereinheit. Die Baugruppe kann in das Gasgeneratorgehäuse eingepresst werden, bis das zweite Halterelement über einen entsprechend ausgebildeten Absatz an einer Anschlagsfläche des Gasgeneratorgehäuses anliegt. Das erste Halterelement kann anschließend mit dem Gasgeneratorgehäuse verschweißt werden.

Zudem lässt sich das aus Metall hergestellte erste Halterelement des Anzünderträgers zur Kontaktierung von Masse- bzw. Kurzschlusselementen verwenden. Die Implementierung der Masse- bzw. Kurzschlussverbindung ist somit vereinfacht, da über das erste Halterelement bereits eine leitende Verbindung mit dem Gasgeneratorgehäuse ausgebildet ist. Es kann demnach ein Erdungselement vorgesehen werden, welches das zweite Halterelement des Anzünderträgers überbrückt, das aus einem Kunststoff hergestellt ist.

Alternativ kann das zweite Halterelement aus einem elektrisch leitfähigen Kunststoff gebildet sein, sodass kein separates Erdungselement verwendet werden muss. Der Anzünderträger ist dennoch mehrteilig ausgebildet, wobei das erste, aus einem Metall gebildete Halterelement werkzeugfallend ist, sodass es nicht nachbearbeitet werden muss. Aufgrund der formschlüssigen Kopplung der beiden Halterelemente müssen diese auch nicht zunächst miteinander verbunden werden.

Ein weiterer Aspekt sieht vor, dass der Anzünder am ersten Halterelement befestigt wird, indem das erste Halterelement teilweise umgeformt wird, bevorzugt bevor das zweite Halterelement an das erste Halterelement gekoppelt wird, was den Vorteil hat, dass ein kompaktes einfaches Montieren von nur zwei Bauteilen nötig ist. Zudem oder alternativ dazu kann eine Steckerbuchse in das zweite Halterelement eingesetzt werden, entweder als eigenständiges separates Bauteil, oder in Form einer direkt an das zweite Halterelement angespritzte Steckerbuchse, sodass diese beiden Einheiten einstückig miteinander verbunden werden. Dementsprechend lässt sich der Anzünder in einfacher Weise am Anzünderträger positionsgetreu anbringen. Der Anzünder kann in das erste Halterelement zumindest teilweise gebördelt werden. Die Steckerbuchse kann in das zweite Halterelement eingesetzt werden, bevor dieses in das Gasgeneratorgehäuse eingebracht wird.

Die Steckerbuchse und das zweite Halterelement können also auch alternativ stoffschlüssig miteinander verbunden werden, indem die Steckerbuchse in das zweite Halterelement eingespritzt wird, sodass sich ein einziges Bauteil ergibt, das gleichzeitig Teil des Anzünderträgers und der Anzündereinheit ist. Die aus einem Kunststoff hergestellte Steckerbuchse und das aus einem Kunststoff hergestellte zweite Halterelement werden spritzgusstechnisch entsprechend miteinander verbunden. Beispielsweise werden beide gleichzeitig in einem Zwei-Komponenten-Spritzgussverfahren hergestellt oder die Steckerbuchse wird an das bereits hergestellte Halterelement angespritzt, wobei sich ebenfalls ein einstückiges Bauteil ergibt.

Die Erfindung stellt ein Verfahren zur Herstellung eines erfindungsgemäßen Gasgenerators bereit, mit den folgenden Schritten:
- Bereitstellen eines Gasgeneratorgehäuses, eines ersten Halterelements, eines zweiten Halterelements, eines Anzünders, eines Dichtungselements und einer Steckerbuchse,
- Einsetzen des Anzünders in das erste Halterelement und Befestigen des Anzünders an dem ersten Halterelement zur Ausbildung einer vorgefertigten Montagegruppe,
- Einsetzen der vorgefertigten Montagegruppe in das Gasgeneratorgehäuse, bevorzugt an einem axialen Endbereich des Gasgenerators und Befestigen der vorgefertigten Montagegruppe an einem Bereich des ersten Halterelements mit dem Gasgeneratorgehäuse,
- Einsetzen des zweiten Halterelements in das Generatorgehäuse in Richtung der vorgefertigten Montagegruppe und Befestigen des zweiten Halterelements an dem Gasgeneratorgehäuse oder dem ersten Halterelement.
- Einsetzen der Steckerbuchse in das zweite Halterelement oder Einspritzen bzw. Anspritzen der Steckerbuchse an das zweite Halterelement.

Vorzugsweise kann das Ein- bzw. Anspritzen der Steckerbuchse an das zweite Halterelement ein Einspritzen eines Erdungselements in die Steckerbuchse in demselben Einspritzvorgang umfassen, wobei ein Kontaktieren des Erdungselements mit dem ersten Halterelement stattfindet.

An diesem Verfahren ist besonders von Vorteil, dass zuerst eine kompakte, nur zwei Bauteile umfassende, vorgefertigte Montagegruppe erzeugt wird. Indem zuerst nur der Anzünder in das erste Halterelement eingesetzt und an diesem befestigt wird, ist lediglich ein äußerst kleiner Raumbedarf für diese Montage erforderlich. Hierbei ist vorgesehen, dass der Anzünder in axialer Richtung in eine Aufnahmeöffnung des ersten Halterelements eingesetzt wird und ein Halteabschnitt, der als axial hervorstehender, radial umlaufender Randbereich des ersten Halterelements ausgebildet ist, radial einwärts auf einen entsprechenden Umfangsbereich des Anzünders umgelegt bzw. an diesen aufgekrimpt wird. Optional vor dem Einsetzen des Anzünders kann noch ein Dichtungselement, vorzugsweise ein O-Ring, in die Aufnahmeöffnung des ersten Halterelements eingesetzt werden, um danach auf dieses Dichtungselement den Anzünder einzusetzen, um die Dichtigkeit zwischen der Verbindung zwischen Anzünder und ersten Halterelement zu erhöhen. Um diese Dichtigkeit noch zusätzlich zu erhöhen könnte der Anzünder zusätzlich noch an dem ersten Halterelement durch eine Verklebung befestigt sein, wobei die Verklebung mit einer geeignete Klebemasse, welche das Dichtungselement und entsprechende Kontaktbereiche des Anzünders und des ersten Halterelements bedeckt, ausgeführt ist. Eine derartige Verklebung kann auch ohne das Dichtungselement und alternativ dazu sogar ohne das Krimpen des umlaufenden Randbereichs des ersten Halterelements erfolgen, wobei demnach der Anzünder lediglich durch die Verklebung in dem ersten Halterelement gehalten und an diesem befestigt ist.

Nach dem Einsetzen des zweiten Halterelements in das Generatorgehäuse kann die Befestigung des zweiten Halterelements an dem Gasgeneratorgehäuse durch einen Form- und/oder Kraftschluss, erfolgen, beispielsweise durch ein Einrasten von einem oder mehreren Rastelementen des zweiten Halterelements in einer oder mehreren entsprechenden Öffnungen im Gasgeneratorgehäuse. Zusätzlich oder alternativ dazu kann die Befestigung des zweiten Halterelements auch an dem ersten Halterelement, ebenfalls durch Form- und/oder Kraftschluss erfolgen. Schließlich gilt es noch die Steckerbuchse, welche optional ein Erdungselement aufweisen kann, zu montieren, was auf folgende zwei alternative Weisen erfolgen kann. Die Steckerbuchse, welche ein optionales integriertes Erdungselement aufweist, kann in das zweite Halterelement eingesetzt werden. Hierbei ist die Steckerbuchse ein vorgefertigtes Kunststoffteil, welches optional bereits ein eingesetztes, vorzugsweise mit eingespritztes Erdungselement umfassen kann. Alternativ dazu kann die Steckerbuchse auch erst hergestellt werden durch ein Einspritzen bzw. Anspritzen der Steckerbuchse an das zweite Halterelement. Bei letztgenannten Einspritz- bzw. Anspritzvorgang kann vorteilhaft gleich ein optionales Erdungselement mit in die Steckerbuchse zu integrieren, also mit einzuspritzen. Im Falle des Vorhandenseins des Erdungselements, wird noch das Erdungselement mit dem ersten Halterelement, insbesondere elektrisch leitend, kontaktiert, damit "Masseanschluss" möglich ist. Mit "Masseanschluss" ist gemeint, dass ein Stecker, welcher in die Steckerbuchse steckbar ist, einen metallischen Massekontaktanschluss aufweist, der elektrisch leitend über das Erdungselement, weiter über das erste Halterelement bis hin zu dem Gasgeneratorgehäuse leitend verbunden werden kann, um einen gewünschten elektrischen Potentialausgleich zwischen dem elektrischen Potential des Fahrzeugs, insbesondere einer Fahrzeugkarosse, in dem der Gasgenerator untergebracht ist, und dem elektrischen Potential des Gasgeneratorgehäuses darzustellen.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine Schnittdarstellung eines erfindungsgemäßen Gasgenerators im Bereich einer erfindungsgemäßen Baugruppe,
- Figur 2 eine gegenüber Figur 1 um 90° gedrehte Schnittansicht des erfindungsgemäßen Gasgenerators aus Figur 1,
- Figur 3 eine weitere Schnittdarstellung des erfindungsgemäßen Gasgenerators aus den Figuren 1 und 2 in einer zur Figur 1 anderen Schnittebene,
- Figur 4 eine Draufsicht auf ein erstes Halterelement eines erfindungsgemäßen Anzünderträgers,
- Figur 5 eine Perspektivansicht des ersten Halterelements aus Figur 4,
- Figur 6 eine Perspektivansicht eines zweiten Halterelements eines erfindungsgemäßen Anzünderträgers, und
- Figur 7 eine weitere Perspektivansicht des zweiten Halterelements aus Figur 6.

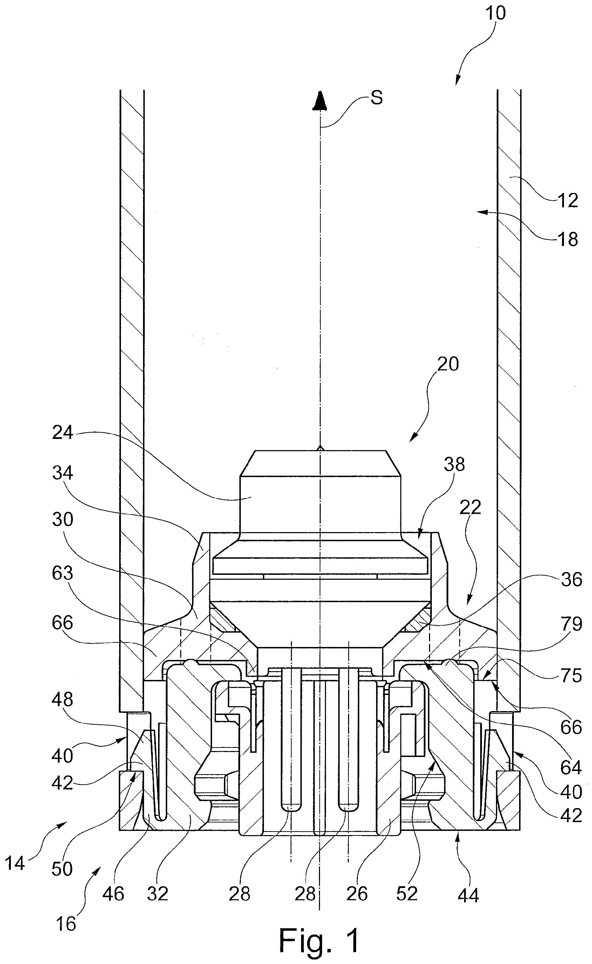

In den Figuren 1 bis 3 ist ein Gasgenerator 10 teilweise in verschiedenen Schnittdarstellungen gezeigt, der ein Aufblasgas für einen Gassack erzeugen kann, über den ein Fahrzeuginsasse eines Kraftfahrzeugs bei einem Unfall geschützt wird.

Der Gasgenerator 10 umfasst ein Gasgeneratorgehäuse 12, das in den Figuren lediglich teilweise gezeigt ist. In der gezeigten Ausführungsform handelt es sich um ein rohrförmiges Gasgeneratorgehäuse 12, sodass der gesamte Gasgenerator 10 im Wesentlichen rohrförmig ausgebildet ist.

Der Gasgenerator 10 weist eine Längsachse S auf, die auch mit eine Axialrichtung des Gasgenerators 10 definiert, nämlich ausgehend von einem axialen Endbereich 14 in Richtung eines ersten Halterelements 30, wie durch die Pfeilsymbole in den Figuren 1-3 dargestellt, sodass der Gasgenerator 10 im Wesentlichen zylindrisch ausgebildet ist. Der Gasgenerator 10 kann zudem im Wesentlichen symmetrisch bezüglich der Längsachse S ausgebildet sein.

Vom Gasgenerator 10 ist lediglich der axiale Endbereich 14 dargestellt, in dem eine Baugruppe 16 an einem Gasgeneratorgehäuse 12 angeordnet ist, die das Gasgeneratorgehäuse 12 abschließt, sodass eine gasdichte Brennkammer 18 im Gasgeneratorgehäuse 12 ausgebildet ist, an die die Baugruppe 16 angrenzt. In der Brennkammer kann ein nicht dargestellter Treibstoff aufgenommen sein, der bei Aktivierung des Gasgenerators 10 angezündet und abgebrannt wird, um Gas, beispielsweise zum Aufblasen eines Luftsackes, zu produzieren. Dabei kann der Treibstoff aus einer Schüttung einzelner Treibstoffkörper, wie z.B. gepressten Treibstofftabletten oder extrudierten Körpern, aber auch in Form eines monolithischen Formkörpers oder in Form von aneinandergereihten Scheiben bzw. Ringen bestehen.

Die Baugruppe 16 weist eine Anzündereinheit 20 sowie einen Anzünderträger 22 auf, der die Anzündereinheit 20 zumindest teilweise im Gasgeneratorgehäuse 12 trägt bzw. haltert. Der Anzünderträger 22 bildet die Schnittstelle zwischen Gasgeneratorgehäuse 12 und Anzündereinheit 20. Generell wird über den Anzünderträger 22 sichergestellt, dass die Anzündereinheit 20 eine gewünschte Lage in Bezug auf das Gasgeneratorgehäuse 12 hat.

Die Anzündereinheit 20 umfasst einen Anzünder 24, der teilweise in die Brennkammer 18 ragt, sowie eine Steckerbuchse 26, die auch als Retainer bezeichnet werden kann, in die ein Stecker (nicht dargestellt) eingesteckt werden kann, um den Anzünder 24 elektrisch zu kontaktieren bzw. mit einer Steuerung zu koppeln, die die Anzündereinheit 20 steuert bzw. aktivieren kann. Der Anzünder 24 weist hierzu Kontaktstifte 28 auf, die innerhalb der Steckerbuchse 26 aufgenommen bzw. von dieser umgeben sind. Beispielsweise ist die Steckerbuchse 26 ein Kunststoffteil.

Der Anzünder 24 sowie die Steckerbuchse 26 werden jeweils vom Anzünderträger 22 gehalten, wie aus den Figuren 1 bis 3 hervorgeht.

Hierzu weist der Anzünderträger 22 das erste Halterelement 30 sowie ein zweites Halterelement 32 auf, die separat voneinander ausgebildet und formschlüssig miteinander gekoppelt sind, insbesondere in Umfangsrichtung sowie in radialer Richtung. Die beiden Halterelemente 30, 32 sind zudem aus unterschiedlichen Werkstoffen gebildet.

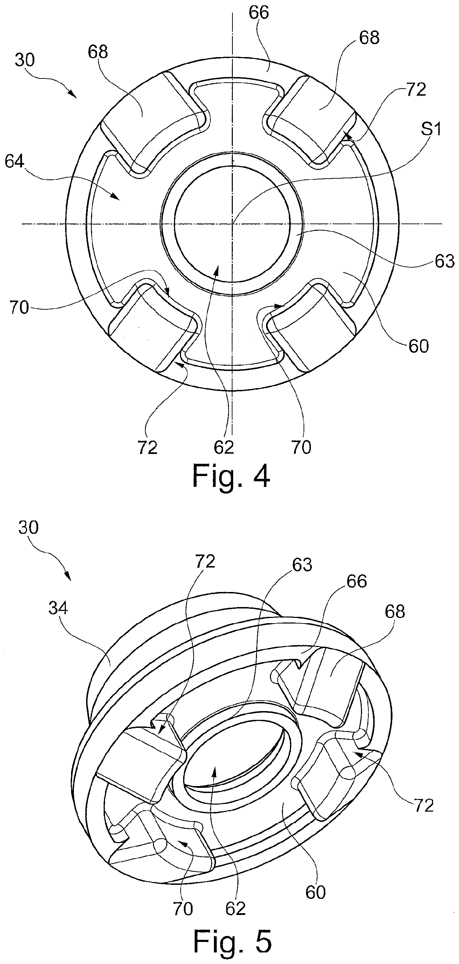

In der gezeigten Ausführungsform ist das erste Halterelement 30 aus einem Metall gebildet, sodass es elektrisch leitfähig ist, wohingegen das zweite Halterelement 32 aus einem Kunststoff hergestellt ist, der elektrisch nicht leitfähig ist. Die beiden Halterelemente 30, 32 sind in den Figuren 4 bis 7 jeweils detailliert dargestellt.

Das erste Halterelement 30 dient zur Fixierung des Anzünders 24 im Gasgeneratorgehäuse 12. Hierzu weist das erste Halterelement 30 einen axial vorstehenden, ringförmigen Halteabschnitt 34 auf, der kragenförmig ausgebildet ist. Der Halteabschnitt 34 kann an seinem freien Ende (plastisch) umgeformt werden, um den Anzünder 24 positionssicher aufzunehmen, insbesondere wird hierbei der Halteabschnitt 34 gebördelt oder gecrimpt, insbesondere radial einwärts auf einen entsprechenden Umfangsbereich des Anzünders. Es wird vorzugsweise lediglich ein unterer Bereich, also ein den Kontaktstiften 28 zugewandter Bereich, des Anzünders 24 vom Halteabschnitt 34 gehalten, sodass sich ein oberer Bereich, also ein den Kontaktstiften 28 abgewandter Bereich, des Anzünders 24 in die Brennkammer 18 erstreckt, wobei der obere Bereich bei einer Aktivierung des Anzünders 24 geöffnet werden kann und heiße Gase bzw. Partikel freigeben kann, welche den Treibstoff (nicht dargestellt) in der Brennkammer anzünden können.

Alternativ oder zusätzlich zu der beschriebenen (plastischen) Umformung des Halteabschnitts 34 ist es auch möglich, dass der Anzünder 24 in dem ersten Halterelement 30 mittels einer Verklebung fixiert bzw. befestigt wird. Zwischen dem Anzünder 24 und dem ersten Halterelement 30 kann ein Dichtungselement 36 eingelegt sein, um eine Dichtigkeit im Anbindungsbereich zu erhöhen. Das Dichtungselement 36 ist in der gezeigten Ausführungsform als ein O-Ring ausgebildet, der zwischen dem Anzünder 24 und dem ersten Halterelement 30 eingequetscht ist.

Das erste Halterelement 30 bildet somit über den Halteabschnitt 34 eine Aufnahme 38 für den Anzünder 24 und das Dichtungselement 36 aus.

Aus der Figur 1 geht ferner hervor, dass das Gasgeneratorgehäuse 12 im Endbereich 14 zwei Öffnungen 40 aufweist, durch die sich jeweils ein Rastelement 42 des Anzünderträgers 22 erstreckt, insbesondere des zweiten Halterelements 32. In der gezeigten Ausführungsform sind die Rastelemente 42 hakenförmig ausgebildet, weswegen sie auch als Rasthaken bezeichnet werden können. Es können auch mehr als zwei Öffnungen 40, insbesondere drei oder vier, in eine Seitenwandung des Gasgeneratorgehäuses 12, vorzugsweise radial umlaufend, eingebracht sein. Die Form der Öffnungen 40 kann dabei rund, insbesondere kreisrund, oder umlaufend schlitz- bzw. rechteckförmig ausgebildet sein, wobei hier auch die Formen der Öffnungen 40 zueinander unterschiedlich ausgebildet sein können, wobei z.B. eine Form einer Öffnung 40 unterschiedlich zum Vergleich mit allen weiteren Öffnungen 40 sein kann, um eine Art von Positionier- bzw. Markiermöglichkeit des Gasgeneratorgehäuses 12 zu erreichen.

Die Rastelemente 42 erstrecken sich jeweils von einer Stirnseite 44 des zweiten Halterelements 32, die vom ersten Halterelement 30 abgewandt ist, in Richtung des ersten Halterelements 30, wobei die Rastelemente 42 jeweils einen Federabschnitt 46 umfassen, der unter anderem eine gewünschte Elastizität der Rastelemente 42 bereitstellt. An den Federabschnitt 46 anschließend ist jeweils ein Rastabschnitt 48 vorgesehen, der eine entsprechende Rastfläche 50 ausbildet, die sich im eingerasteten Zustand des Rastelements 42 in der Öffnung 40 am Rand der entsprechenden Öffnung 40 abstützt.

Des Weiteren geht aus der Figur 1 hervor, dass das zweite Halterelement 32 einen Hinterschnitt 52 aufweist, in dem die Anzündereinheit 20 teilweise aufgenommen ist, insbesondere die Steckerbuchse 26. Der Hinterschnitt 52 stellt sicher, dass die Steckerbuchse 26 und somit die Anzündereinheit 20 positionsgetreu im Anzünderträger 22 angeordnet ist. Das zweite Halterelement 32 dient demnach zur Positionierung der Steckerbuchse 26.

Folglich werden der Anzünder 24 der Anzündereinheit 20 über das erste Halterelement 30 und die Steckerbuchse 26 der Anzündereinheit 20 über das zweite Halterelement 32 in gewünschter Weise innerhalb des Gasgeneratorgehäuses 12 positioniert. Dementsprechend dient der Anzünderträger 22 zur Positionierung und Anbindung der Anzündereinheit 20 im Gasgeneratorgehäuse 12.

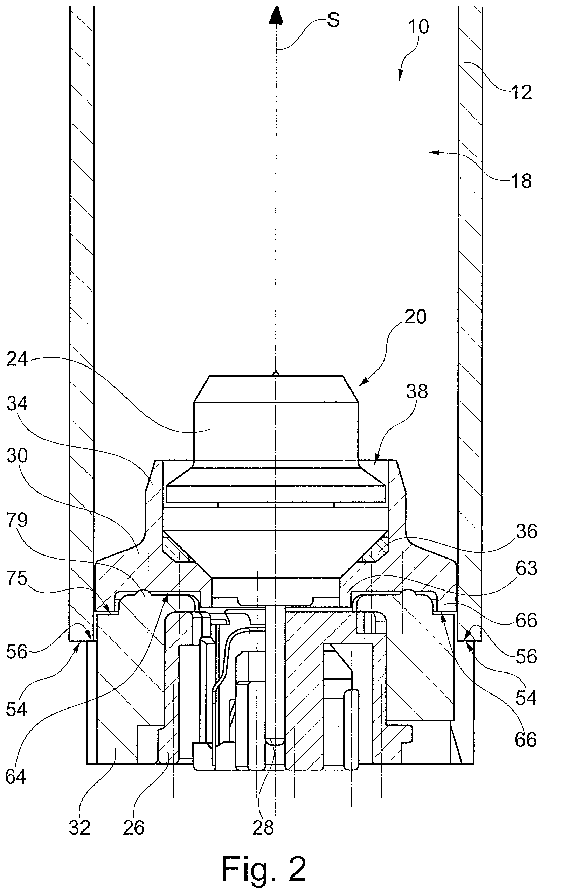

In Figur 2 ist dargestellt, dass das Gasgeneratorgehäuse 12 zwei Anschlagsflächen 54 für die Baugruppe 16 aufweist, insbesondere für das zweite Halterelement 32, sodass diese eine vordefinierte Position in Bezug auf das Gasgeneratorgehäuse 12 einnimmt, wenn die Baugruppe 16 in das Gasgeneratorgehäuse 12 eingesetzt wird, insbesondere in den axialen Endbereich 14 eingepresst wird. Das zweite Halterelement 32 kann einen radial vorstehenden Absatz 56 aufweisen, über den die Baugruppe 16 dann an entsprechenden Anschlagsflächen 54 anliegt. Bei dem Absatz 56 kann es sich um eine radial abstehende Pressnase handeln, die in radialer Richtung federnd bzw. plastisch verformbar ausgebildet ist.

Die beiden Anschlagsflächen 54 können hinsichtlich ihrer axialen Position unterschiedlich ausgebildet sein, wodurch sich eine definierte Orientierung in Umfangsrichtung der Baugruppe 16, insbesondere des zweiten Halterelements 32, im Gasgeneratorgehäuse 12 festlegen lässt. Auch können die Anschlagflächen 54 eine unterschiedliche Breite aufweisen. Der Absatz 56 bzw. entsprechende Abätze 56 sind in analoger Weise unterschiedlich ausgebildet.

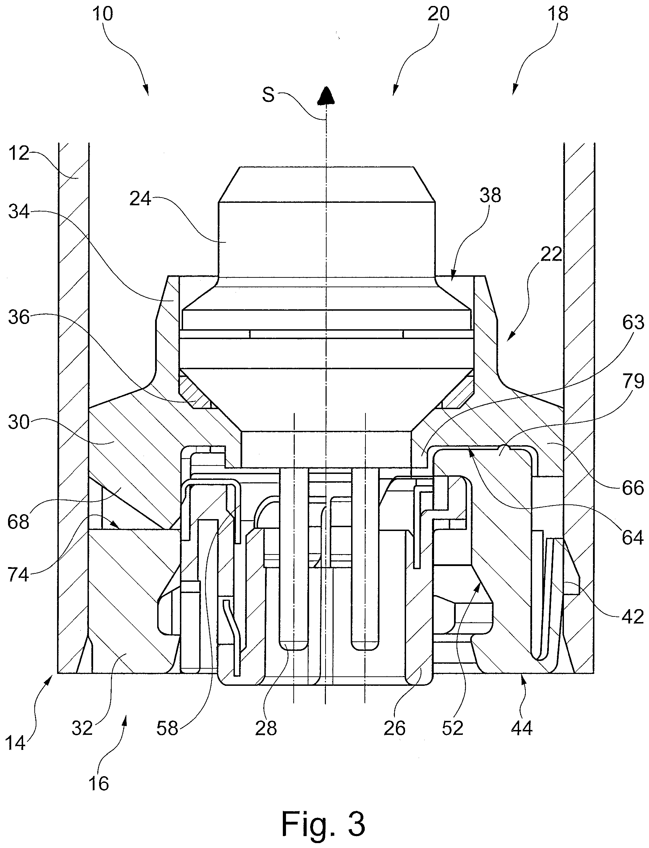

In Figur 3 ist gezeigt, wie ein Massekontakt der Anzündereinheit 20, insbesondere der Steckerbuchse 26, über ein separat ausgebildetes Erdungselement 58 mit dem Gasgeneratorgehäuse 12 hergestellt wird. Das erste, aus einem Metall hergestellte Halterelement 30 wird dabei zur elektrischen Verbindung genutzt, mit dem das Erdungselement 58 in Verbindung steht. Das Erdungselement 58 lässt sich als in Form einer Massekralle ausbilden, die sich entsprechend in das erst Halterelement 30 einkrallt, um einen umlaufenden Innenbereich des ersten Halterelements 30 elektrisch leitend zu kontaktieren.

Generell kann das Erdungselement 58 Teil eines Metalleinlegeteils sein, das von der aus Kunststoff hergestellten Steckerbuchse 26 umgeben ist. Das Metalleinlegeteil kann zusätzlich zur Massekontaktierung auch zur Ausbildung eines Kurzschlusselementes dienen, welches die Kontaktstifte 28 des Anzünders 24 elektrisch leitend kurzschließt, sofern kein Stecker in der Steckerbuchse 26 eingesteckt ist. Sobald ein Stecker in die Steckerbuchse 26 eingesteckt wird, wird das Kurzschlusselement derart von den Kontaktstiften 28 weggedrückt, dass der vorher elektrisch leitende Kurzschluss zwischen beiden Kontaktstiften 28 aufgehoben wird.

In den Figuren 4 und 5 ist das erste Halterelement 30 detailliert gezeigt. Aus den Figuren geht hervor, dass das erste Halterelement 30 einen im Wesentlichen ringförmigen Grundkörper 60 aufweist, der eine Längsachse S1 hat, die mittig durch eine Ausnehmung 62 im Grundkörper 60 in Axialrichtung verläuft.

Die Ausnehmung 62 ist zudem von einem Kragenrand 63 umgeben, der ringförmig ausgebildet ist.

Das erste Halterelement 30 hat ferner eine axiale Kontaktfläche 64, die gegenüber einem radial außenliegenden Randbereich 66 zurückgesetzt ist. Die axiale Kontaktfläche 64 ist zudem auch gegenüber dem Kragenrand 63 zurückgesetzt, der sich wie der Randbereich 66 in axialer Richtung über die Kontaktfläche 64 erstreckt. Der Kragenrand 63, die axiale Kontaktfläche 64 und der Randbereich 66 sind im zusammengesetzten Zustand des Anzünderträgers 22, also wenn das erste Halterelement 30 mit dem zweiten Halterelement 32 gekoppelt ist, jeweils dem zweiten Halterelement 32 zugewandt (siehe Figuren 1 bis 3).

Der Kragenrand 63 sowie der Randbereich 66 sind im Wesentlichen konzentrisch um die Längsachse S1 angeordnet, sodass sich zwischen ihnen ein vertiefter Freiraum bildet, der axial durch die Kontaktfläche 64 begrenzt ist.

Von der axialen Kontaktfläche 64 stehen vier Nasen 68 in axialer Richtung vor, also in Richtung zum zweiten Halterelement 32, wenn sich der Anzünderträger 22 im zusammengesetzten Zustand befindet. Die Nasen 68 sind dabei rampenförmig ausgebildet, wobei sie sich von radial außen nach radial innen, in Richtung dem zweiten Halterelement, in axialer Richtung erhöhen. Zudem gehen die Nasen 68 von radial außen nach radial innen von dem Randbereich 66 aus, also von einer gegenüber der axialen Kontaktfläche 64 erhöhten Position. Die Nasen können jedoch auch andere geometrische Raumformen umschließen und dabei beispielsweise quader- oder würfelförmig ausgebildet sein.

Die Nasen 68 weisen Zentrierungsflächen 70 auf, die radial einwärts gewandt sind. Die Zentrierungsflächen 70 der Nasen 68 bilden jeweils einen Teilabschnitt einer Mantelfläche eines Zylinders, wobei über die Zentrierungsflächen 70 die Steckerbuchse 26 der Anzündereinheit 20 zentriert wird. Die Zentrierungsflächen 70 bilden insbesondere Teilabschnitte einer gemeinsamen Mantelfläche eines einzigen Zylinders, wodurch sich die Steckerbuchse 26 entsprechend einfacher zentrieren lässt.

Aus der Figur 3 geht zudem hervor, dass die Nasen 68, vorzugsweise deren Zentrierungsflächen 70, zur Kontaktierung des Erdungselements 58 dienen. Das Erdungselement 58 liegt also an zumindest einer der Zentrierungsflächen 70 an, um die elektrische Verbindung herzustellen.

Des Weiteren haben die Nasen 68 in Umfangsrichtung jeweils Anlageflächen 72, über die die Nasen 68 mit dem zweiten Halterelement 32 zusammenwirken, um einen Formschluss in Umfangsrichtung auszubilden wie nachfolgend noch erläutert wird.

In der gezeigten Ausführungsform weist eine der Nasen 68 (oben links in Figur 4) eine andere Breite als die übrigen Nasen 68 auf, wodurch eine relative Orientierung der beiden Halterelemente 30, 32 zueinander gewährleistet ist, wenn diese zusammengesetzt werden.

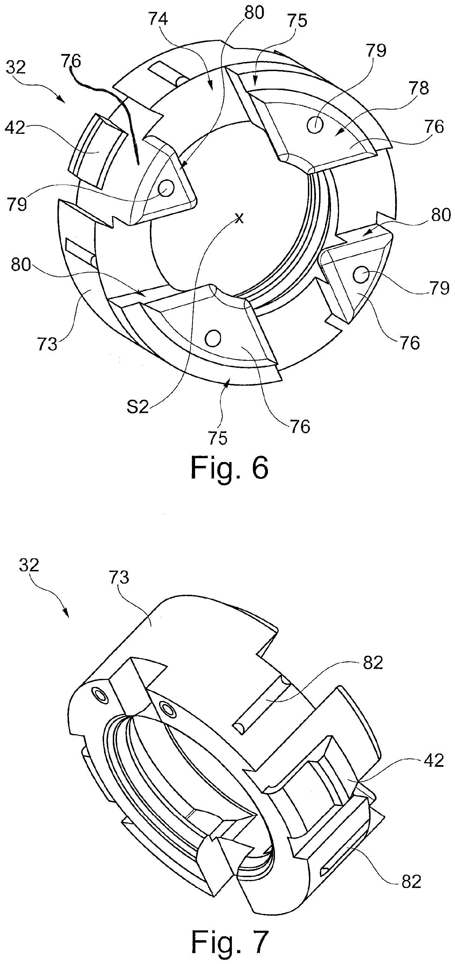

Das zweite Halterelement 32, welches in den Figuren 6 und 7 detailliert gezeigt ist, weist ebenfalls einen im Wesentlichen ringförmigen Grundkörper 73 mit einer zentralen Ausnehmung auf, sodass auch das zweite Halterelement 32 eine Längsachse S2 aufweist, die entlang der Axialrichtung verläuft.

Der Grundkörper 73 hat eine axiale Stirnfläche 74, die im zusammengesetzten Zustand dem ersten Halterelement 30 zugewandt ist (siehe Figur 3), wobei die Nase 68 und die Stirnfläche 74 sich entsprechend kontaktieren. Die axiale Stirnfläche 74 ist gegenüber einem Außenrand 75 in axialer Richtung zurückgesetzt, der in der gezeigten Ausführungsform zweimal teilkreisförmig ausgebildet ist.

Zudem stehen in der gezeigten Ausführungsform von der axialen Stirnfläche 74 vier Vorsprünge 76 in axialer Richtung vor, die zusammen eine axiale Druckfläche 78 ausbilden, die dementsprechend parallel zur axialen Stirnfläche 74 ist. Sich gegenüberliegende Vorsprünge 76 sind jeweils gleich ausgebildet.

Auf der axialen Druckfläche 78, insbesondere den jeweiligen Vorsprüngen 76, sind zudem Pressnasen 79 ausgebildet, die in axialer Richtung gegenüber der Druckfläche 78 vorstehen.

Das zweite Halterelement 32 ist im zusammengesetzten Zustand von ersten und zweiten Halterelement (30, 32) derart an das erste Halterelement 30 gepresst, dass die Pressnasen 79, die axial vorstehen, auf die axiale Kontaktfläche 64 des ersten Halterelements 30 gedrückt werden, wodurch sich der Formschluss in axialer Richtung ergibt (siehe Figuren 1 bis 3).

Zudem können die Nasen 68 des ersten Halterelements 30 auf die axiale Stirnfläche 74 des zweiten Halterelements 32 gepresst sein. Daher können die Nasen 68 des ersten Halterelements 30 ebenfalls als Pressnasen aufgefasst werden.

Die Nasen 68 des ersten Halterelements 30 und die Vorsprünge 76 des zweiten Halterelements 32 sind derart dimensioniert, dass zwischen ihnen Freiräume ausgebildet sind, in denen die Vorsprünge 76 bzw. die Nasen 68 entsprechend eingreifen können. Dementsprechend greifen die beiden Halterelemente 30, 32 in ihrem zusammengesetzten Zustand zumindest teilweise ineinander, nämlich über ihre Nasen 68 und Vorsprünge 76.

Die axial vorstehenden Vorsprünge 76 weisen ebenfalls in Umfangsrichtung gesehen Anlageflächen 80 auf, über die das zweite Halterelement 32 mit den Anlageflächen 72 des ersten Halterelements 30 einen Formschluss in Umfangsrichtung ausbildet, sodass die beiden Halterelemente 30, 32 im Wesentlichen nicht relativ zueinander verdreht werden können.

Sowohl die Nasen 68 als auch die Vorsprünge 76 weisen jeweils an ihren in Umfangsrichtung entgegengesetzten Enden zwei Anlageflächen 72 (bezogen auf die Nasen 68) und 80 (bezogen auf die Vorsprünge 76) auf.

Die Vorsprünge 76 des zweiten Halterelements 32 sind zudem zwischen dem Außenrand 66 und dem Kragenrand 63 des ersten Halterelements 30 in radialer Richtung formschlüssig aufgenommen, sodass die beiden Halterelemente 30, 32 im zusammengesetzten Zustand in radialer Richtung relativ zueinander im Wesentlichen festgelegt sind.

Aus der Figur 7 geht ferner hervor, dass das zweite Halterelement 32 radial abstehende Federnasen 82 aufweist, über die sich das zweite Halterelement 32 im im Gasgeneratorgehäuse 12 verbauten Zustand in radialer Richtung abstützt und zentriert. Die radial abstehenden Federnasen 82 dienen dabei auch zum Ausgleich von nicht zu verhindernden Fertigungstoleranzen bei der Herstellung.

Des Weiteren können die radial abstehenden Federnasen 82 mit den Anschlagsflächen 54 des Gasgeneratorgehäuses 12 in axialer Richtung zusammenwirken. Die Federnasen 82 sind dabei derart ausgebildet, dass sie bei einem axialen Druck nicht in radiale Richtung einfedern, weswegen die Baugruppe 16 an den Anschlagsflächen 54 in axialer Richtung anschlagen kann, sodass sich die Baugruppe 16 hinsichtlich ihrer axialen Position an der vorgesehenen Stelle befindet.

Generell sind die beiden Halterelemente 30, 32 im Wesentlichen symmetrisch ausgebildet, wobei deren Längsachsen S1, S2 im montierten Zustand mit der Längsachse S des Gasgenerators 10 zusammenfallen.

Es sind somit ein Gasgenerator 10, eine Baugruppe 16, umfassend die Anzündereinheit 20 sowie den Anzünderträger 22, mit denen in einfacher Weise eine elektrische Kontaktierung bzw. ein Massekontakt hergestellt werden kann, wobei der Anzünderträger 22 zudem kostengünstig und einfach herstellbar ist.

Zur Herstellung des Gasgenerators 10 können zunächst die Einzelteile bereitgestellt werden, also das Gasgeneratorgehäuse 12 sowie die Baugruppe 16, wobei diese ebenfalls im zerlegten Zustand, also die Anzündereinheit 20, umfassend Anzünder 24 und Steckerbuchse 26, sowie der Anzünderträger 22, umfassend das erste und zweite Halterelement 30 und 32, bereitgestellt werden kann.

Bei der Herstellung des Gasgeneratorgehäuses 12 werden in das Gasgeneratorgehäuse 12, vorzugsweise in einem Herstellungsschritt die Öffnungen 40 und die Anschlagsflächen 54 ausgebildet, um etwaige Fertigungstoleranzen zu minimieren. Zudem weist das Gasgeneratorgehäuse 12 einen Innendurchmesser auf, der einen Presssitz für das erste Halterelement 30 darstellt, wenn dieses in das Gasgeneratorgehäuse 12 eingesteckt bzw. eingepresst wird.

Zuvor wird jedoch der Anzünder 24 mit dem ersten Halterelement 30 gekoppelt, indem der Anzünder 24 und das Dichtungselement 36 in die Aufnahme 38 eingesetzt und anschließend der Halteabschnitt 34 des ersten Halterelements 30 umgeformt wird, insbesondere gebördelt wird. Alternativ oder zusätzlich kann der Anzünder 24 auch in das erste Halterelement 30 eingeklebt bzw. eingesetzt und mit diesem verklebt werden.

Anschließend wird die Steckerbuchse 26 in das zweite Halterelement 32 eingesetzt, welches daraufhin mit dem ersten Halterelement 30 zusammengesetzt wird. Hierbei richten sich die Halterelemente 30, 32 in Umfangsrichtung zueinander aus, sodass sie über ihre Nasen 68 bzw. Vorsprünge 76 zumindest teilweise ineinander eingreifen. Gleichzeitig erfolgt hierbei eine Zentrierung der Steckerbuchse 26 über die Zentrierungsflächen 70. Es ist auch denkbar, dass das zuerst das zweite Halterelement 32 mit dem ersten Halterelement 30 miteinander gekoppelt bzw. ineinander gesteckt wird und danach die Steckerbuchse 26 in das zweite Halterelement 32 eingesetzt wird.

Zudem kann das zumindest ein Erdungselement 58 mit dem ersten Halterelement 30 gekoppelt bzw. kontaktiert werden, insbesondere mit einer der Zentrierungsflächen 70. Hierbei kann das Erdungselement 58 bereits integraler Bestandteil der Steckerbuchse 26 sein.

Dann wird die zuvor hergestellte Baugruppe 16, umfassend die Anzündereinheit 20 sowie den Anzünderträger 22, über das offene Ende des Gasgeneratorgehäuses 12 in dieses eingesetzt, bis die Baugruppe 16 über das zweite Halterelement 32, insbesondere über einen entsprechenden Absatz, an den Anschlagsflächen 54 des Gasgeneratorgehäuses 12 axial anschlägt.

Die Rastelemente 42 des zweiten Halterelements 32 rasten dann im Wesentlichen gleichzeitig in die entsprechenden Öffnungen 40 im Gasgeneratorgehäuse 12, sodass die Baugruppe 16 (vor-)fixiert ist.

Anschließend kann noch eine Schweißverbindung zwischen dem Gasgeneratorgehäuse 12 und dem ersten Halterelement 30 ausgebildet werden, sodass die Baugruppe 16 in ihrer Endposition fixiert ist.

Spätestens durch die Schweißverbindung entsteht eine elektrische Verbindung zwischen dem ersten Halterelement 30 und dem Gasgeneratorgehäuse 12, wobei diese aufgrund des Presssitzes typischerweise bereits zuvor gegeben war.

Alternativ kann die Steckerbuchse 26 bereits einstückig in das zweite Halterelement 32 integriert sein, also in dieses eingespritzt bzw. an dieses angespritzt sein, sodass lediglich ein einziges Kunststoffbauteil vorliegt, das gleichzeitig Teil des Anzünderträgers 22 und der Anzündereinheit 20 ist.

Ferner können die beiden Halterelemente 30, 32 auch nacheinander und jeweils einzeln in das Gasgeneratorgehäuse 12 eingesetzt werden, also zunächst das erste Halterelement 30 und anschließend das zweite Halterelement 32. Die Massekontaktierung kann dabei über als Massekrallen ausgebildete Erdungselemente 58 erfolgen, die sich in das bereits eingesetzte erste Halterelement 30 einkrallen.

Beim Einpressen des zweiten Halterelements 32 presst dieses das erste Halterelement 30 entlang des im Gasgeneratorgehäuse 12 ausgebildeten Presssitzes, bis das zweite Halterelement 32 an die Anschlagsfläche(n) anschlägt. Hierbei rasten auch die entsprechenden Rastelemente 42 in die Öffnungen 40 in analoger Weise zur zuvor beschriebenen Ausführungsform ein. Alternativ dazu kann die Montage wie folgt ausgeführt werden. Das Dichtungselement 36 wird in das erste Halterelement 30 eingesetzt, danach wird der Anzünder 24 ebenfalls in das erste Halterelement 30, axial auf das Dichtungselement 36, eingesetzt. Nun wird der Anzünder 24 an dem ersten Halterelement 30 befestigt durch Krimpen des Halteabschnitts 34 des ersten Halterelements 30 zur Ausbildung einer vorgefertigten Montagegruppe.

Die derart vorgefertigte Montagegruppe wird nun in das Gasgeneratorgehäuse 12 an dessen axialen Endbereich 14 eingeschoben und befestigt durch ein Verschweißen des ersten Halterelements 30 mit dem Gasgeneratorgehäuse 12.

Danach wird das zweite Halterelement 32 in das Generatorgehäuse 12 in Richtung der vorgefertigten Montagegruppe eingesetzt und zu dem ersten Halterelement 30 in radialer Richtung ausgerichtet, wobei das zweite Halterelement 32 an dem Gasgeneratorgehäuse 12 durch ein Einrasten der Rastelemente 42 des zweiten Halterelements 32 in die entsprechenden Öffnungen 40 im Gasgeneratorgehäuse 12 fixiert wird.

Schließlich wird noch die Steckerbuchse 26, welche ein integriertes Erdungselement 58 aufweist, in das zweite Halterelement 32 eingesetzt. Alternativ dazu kann die Steckerbuchse 26 erst hergestellt werden, durch Einspritzen bzw. Anspritzen der Steckerbuchse 26 an das zweite Halterelement 32, wobei ein Erdungselement 58 in die Steckerbuchse 26 mit eingespritzt wird.

## Patentansprüche

1. Anzünderträger (22) für eine Anzündereinheit (20) eines Gasgenerators (10), mit einem ersten Halterelement (30) aus einem ersten Werkstoff und einem zweiten Halterelement (32) aus einem zweiten, zum ersten Werkstoff unterschiedlichen Werkstoff, wobei beide Halterelemente (30, 32) formschlüssig miteinander koppelbar sind, **dadurch gekennzeichnet, dass** das erste Halterelement (30) eine axiale Kontaktfläche (64) für das zweite Halterelement (32) an einer Stirnseite aufweist, die dem zweiten Halterelement (32) zugeordnet ist und, dass das zweite Halterelement (32) axial vorstehende Vorsprünge (76) aufweist, wobei die Vorsprünge (76) eine axiale Druckfläche (78) haben, über die sie mit der axialen Kontaktfläche (64) des ersten Halterelements (30) zusammenwirken, wobei das erste Halterelement (30) an der Stirnseite, die dem zweiten Halterelement (32) zugeordnet ist, axial vorstehende Nasen (68) aufweist, und wobei die Vorsprünge (76) und die Nasen (68) in Umfangsrichtung vorgesehene Anlageflächen (80, 72) zur Orientierung der Halterelemente (32, 30) aufweisen.

2. Anzünderträger (22) nach Anspruch 1, **dadurch gekennzeichnet, dass** die Nasen (68) rampenartig ausgebildet sind, sodass sie von radial außen nach radial innen in Richtung dem zweiten Halterelement (32) ansteigend sind.

3. Anzünderträger (22) nach Anspruch 1 oder 2, **dadurch gekennzeichnet, dass** das erste Halterelement (30) aus einem, insbesondere elektrisch leitfähigen, Metall gebildet und mit der Anzündereinheit (20), zu einer vorgefertigten Montagegruppe zusammenbaubar ist.

4. Anzünderträger (22) nach einem der Ansprüche 1 bis 3, **dadurch gekennzeichnet, dass** das zweite Halterelement (32) aus einem Kunststoff ausgebildet ist.

5. Anzünderträger (22) nach einem der Ansprüche 1 bis 4, **dadurch gekennzeichnet, dass** beide Halterelemente (30, 32) in Umfangsrichtung und in radialer Richtung formschlüssig gekoppelt sind.

6. Anzünderträger (22) nach einem der vorhergehenden Ansprüche, **dadurch gekennzeichnet, dass** das zweite Halterelement (32) zumindest ein radial außen angeordnetes, insbesondere hakenförmig ausgebildetes, Rastelement (42) aufweist, insbesondere wobei sich das Rastelement (42) von einer Stirnseite des zweiten Halterelement (32) aus erstreckt, die vom ersten Halterelement (30) abgewandt ist.

7. Anzünderträger (22) nach einem der vorhergehenden Ansprüche, **dadurch gekennzeichnet, dass** das zweite Halterelement (32) an dessen Innenseite einen Hinterschnitt (52) für die Anzündereinheit (20), insbesondere für die Steckerbuchse (26), aufweist.

8. Baugruppe (16) umfassend einen Anzünderträger (22) nach einem der vorhergehenden Ansprüche und eine Anzündereinheit (20).

9. Baugruppe (16) nach dem voranstehenden Anspruch, **dadurch gekennzeichnet, dass** die Anzündereinheit (20) eine Steckerbuchse (26) umfasst, die in das zweite Halterelement (32) eingesetzt ist oder die an das zweite Halterelement (32) angespritzt ist, um mit diesem ein einstückiges Bauteil auszubilden, wobei vorzugsweise die Steckerbuchse (26) ein Erdungselement (58) aufweist, welches das erste Halterlement (30) elektrisch leitend kontaktiert.

10. Gasgenerator (10) mit einer Baugruppe (16) nach einem der Ansprüche 8 oder 9, der ein Gasgeneratorgehäuse (12) aufweist, in dem die Baugruppe (16) zumindest teilweise aufgenommen ist, wobei vorzugsweise das Gasgeneratorgehäuse (12) wenigstens eine Anschlagsfläche (54) für die Baugruppe (16) aufweist.

11. Gasgenerator (10) nach Anspruch 10, **dadurch gekennzeichnet, dass** das Gasgeneratorgehäuse (12) in einem Endbereich (14) zumindest eine Öffnung (40) aufweist, über die die Baugruppe (16) am Gasgeneratorgehäuse (12) lagefixiert ist, insbesondere wobei sich ein/das Rastelement (42) des zweiten Halterelements (32) durch die Öffnung (40) erstreckt.

12. Gasgenerator (10) nach einem der Ansprüche 10 bis 11, **dadurch gekennzeichnet, dass** der Gasgenerator (10) ein pyrotechnischer Gasgenerator, ein Hybridgasgenerator, ein Gurtstraffer oder ein Aktuator ist, insbesondere für einen Motorhaubenaufsteller oder einen Überrollbügel eines Fahrzeugs, wobei das Gasgeneratorgehäuse (12) rohrförmig oder toroidförmig ist.

13. Verfahren zur Herstellung eines Gasgenerators (10) nach einem der Ansprüche 10-12 mit den folgenden Schritten:
a) Bereitstellen eines Gasgeneratorgehäuses (12), eines ersten Halterelements (30), eines zweiten Halterelements (32), eines Anzünders (24) und einer Steckerbuchse (26),
b) Einsetzen des Anzünders (24) in das erste Halterelement (30) und Befestigen des Anzünders (24) an dem ersten Halterelement (30) zur Ausbildung einer vorgefertigten Montagegruppe,
c) Einsetzen der vorgefertigten Montagegruppe in das Gasgeneratorgehäuse (12), bevorzugt an einem axialen Endbereich (14) des Gasgenerators (10) und Befestigen der vorgefertigten Montagegruppe an einem Bereich des ersten Halterelements (30) mit dem Gasgeneratorgehäuse (12),
d) Einsetzen des zweiten Halterelements (32) in das Generatorgehäuse (12) in Richtung der vorgefertigten Montagegruppe und Befestigen des zweiten Halterelements (32) an dem Gasgeneratorgehäuse (12) oder dem ersten Halterelement (30).
e) Einsetzen der Steckerbuchse (26) in das zweite Halterelement (32) oder Ein- bzw. Anspritzen der Steckerbuchse (26) an das zweite Halterelement (32).

14. Verfahren zur Herstellung eines Gasgenerators (10) nach Anspruch 13, **dadurch gekennzeichnet, dass** das Ein- bzw. Anspritzen der Steckerbuchse (26) an das zweite Halterelement (32) ein Einspritzen eines Erdungselements (58) in die Steckerbuchse (26) in demselben Einspritzvorgang umfasst und Kontaktieren des Erdungselements (58) mit dem ersten Halterelement (32).

## Claims

1. An igniter support (22) for an igniter unit (20) of a gas generator (10) comprising a first holder element (30) made from a first material and a second holder element (32) made from a second material different from the first material, wherein both holder elements (30, 32) are adapted to be positively coupled to each other, **characterized in that** the first holder element (30) comprises an axial contact surface (64) for the second holder element (32) on a front face associated with the second holder element (32) and **in that** the second holder element (32) has axially protruding projections (76), the projections (76) having an axial pressure surface (78) via which they interact with the axial contact surface (64) of the first holder element (30), wherein the first holder element (30) includes axially protruding lugs (68) at the front face associated with the second holder element (32) and wherein the projections (76) and the lugs (68) include bearing surfaces (80, 72) provided in the circumferential direction for orientating the holder elements (32, 30).

2. The igniter support (22) according to claim 1, **characterized in that** the lugs (68) are ramp-shaped so that they are rising from radially outside to radially inside in the direction of the second holder element (32).

3. The igniter support (22) according to claim 1 or 2, **characterized in that** the first holder element (30) is made from, especially electrically conductive, metal and can be assembled with the igniter unit (20) to form a prefabricated assembly group.

4. The igniter support (22) according to claim 1 to 3, **characterized in that** the second holder element (32) is made from a plastic material.

5. The igniter support (22) according to claim 1 to 4, **characterized in that** both holder elements (30, 32) are positively coupled in circumferential and radial direction.

6. The igniter support (22) according to any one of the preceding claims, **characterized in that** the second holder element (32) has at least one detent element (42) arranged radially outside and being especially hook-shaped, particularly wherein the detent element (42) extends from a front face of the second holder element (32) which is facing away from the first holder element (30).

7. The igniter support (22) according to any one of the preceding claims, **characterized in that** the second holder element (32) includes, on the inner face thereof, an undercut (52) for the igniter unit (20), especially for the socket (26).

8. A subassembly (16) comprising an igniter support (22) according to any one of the preceding claims and an igniter unit (20).

9. The subassembly (16) according to the preceding claim, **characterized in that** the igniter unit (20) comprises a socket (26) which is inserted in the second holder element (32) or which is attached to the second holder element (32) by injection molding to form an integral component with the latter, the socket (26) preferably including a ground element (58) that contacts the first holder element (30) in an electrically conducting manner.

10. A gas generator (10) comprising a subassembly (16) according to any one of the claims 8 or 9, including a gas generator housing (12) in which the subassembly (16) is at least partially received, the gas generator housing (12) preferably including at least one stop face (54) for the subassembly (16).

11. The gas generator (10) according to claim 10, **characterized in that** the gas generator housing (12) in an end section (14) includes at least one opening (40) via which the subassembly (16) is fixed in position on the gas generator housing (12), especially with a/the detent element (42) of the second holder element (32) extending through the opening (40).

12. The gas generator (10) according to any one of the claims 10 to 11, **characterized in that** the gas generator (10) is a pyrotechnic gas generator, a hybrid gas generator, a belt tensioner or an actuator, especially for a hood prop or a roll-over bar of a vehicle, the gas generator housing (12) being tube-shaped or toroid shaped.

13. A method for manufacturing a gas generator (10) according to any one of the claims 10-12 comprising the following steps of:
a) providing a gas generator housing (12), a first holder element (30), a second holder element (32), an igniter (24) and a socket (26),
b) inserting the igniter (24) into the first holder element (30) and fastening the igniter (24) to the first holder element (30) for configuring a prefabricated assembly group,
c) inserting the prefabricated assembly group into the gas generator housing (12), preferably at an axial end section (14) of the gas generator (10) and fastening the prefabricated assembly group at a portion of the first holder element (30) to the generator housing (12),
d) inserting the second holder element (32) into the gas generator housing (12) in the direction of the prefabricated assembly group and fastening the second holder element (32) to the gas generator housing (12) or the first holder element (30),
e) inserting the socket (26) into the second holder element (32) or injecting or, resp., attaching by injection-molding the socket (26) to the second holder element (32).

14. The method for manufacturing a gas generator (10) according to claim 13, **characterized in that** injecting or, resp., attaching by injection molding the socket (26) to the second holder element (32) comprises injecting of a ground element (58) into the socket (26) in the same injection operation and establishing a contact between the ground element (58) and the first holder element (32).

## Revendications

1. Support allumeur (22) pour une unité d'allumage (20) d'un générateur de gaz (10), avec un premier élément de support (30) fait d'un premier matériau et un deuxième élément de support (32) fait d'un deuxième matériau différent du premier matériau, pour lequel les deux éléments de support (30, 32) peuvent être couplés par forme l'un à l'autre, **caractérisé en ce que** le premier élément de support (30) présente une surface de contact axiale (64) sur une extrémité, laquelle est affectée au deuxième élément de support (32) et, **en ce que** le deuxième élément de support (32) possède des saillies axialement saillantes (76), pour lequel les saillies (76) ont une surface de pression axiale ((78), par l'intermédiaire de laquelle elles interagissent avec la surface de contact (64) du premier élément de support (30), pour lequel le premier élément de support (30) présente des pattes faisant saillies axialement (68) à l'extrémité, qui est affectée au deuxième élément de support (32), et pour lequel les saillies (76) et les pattes (64) présente des surfaces de positionnement (80,72) en direction circonférentielle pour l'orientation des éléments de support (30,32).

2. Support allumeur (22) selon la revendication 1, **caractérisé en ce que** les pattes (68) sont conçues comme des rampes de sorte qu'elles s'élèvent de l'extérieur radialement vers l'intérieur radialement en direction du deuxième élément de support (32).

3. Support allumeur (22) selon la revendication 1 ou 2, **caractérisé en ce que** le premier élément de support (30) est formé d'un métal, notamment électriquement conducteur, et peut être assemblé avec l'unité d'allumage (20) pour former un groupe d'assemblage préfabriqué.

4. Support allumeur (22) selon l'une des revendications 1 à 3, **caractérisé en ce que** le deuxième élément de support (32) est formé d'une matière plastique.

5. Support allumeur (22) selon l'une quelconque des revendications 1 à 4, **caractérisé en ce que** les deux éléments de support (30, 32) sont couplés par forme dans le sens circonférentiel et dans le sens radial.

6. Support allumeur (22) selon l'une des revendications précédentes, **caractérisé en ce que** le deuxième élément de support (32) présente au moins un élément de verrouillage (42) disposé vers l'extérieur radialement, notamment en forme de crochet, en particulier pour lequel l'élément de verrouillage (42) s'étend d'une extrémité du deuxième élément de support (32) laquelle est opposée au premier élément de support (30).

7. Support allumeur (22) selon l'une des revendications précédentes, **caractérisé en ce que** le deuxième élément de support (32) présente une contre-dépouille (52) pour l'unité d'allumage (20), notamment pour la douille de branchement (26), à l'intérieur de celui-ci.

8. Ensemble (16) comprenant un support allumeur (22) selon l'une des revendications précédentes et une unité d'allumage (20).

9. Ensemble (16) selon la revendication précédente, **caractérisé en ce que** l'unité d'allumage (20) comprend une douille de branchement (26) qui est insérée dans le deuxième élément de support (32) ou qui est surmoulée sur le deuxième élément de support (32) pour former un composant monobloc avec celui-ci, pour lequel la douille de branchement (26) possède de préférence un élément de mise à la terre (58) qui établit un contact électriquement conducteur avec le premier élément de support (30).

10. Générateur de gaz (10) avec un ensemble (16) selon l'une des revendications 8 ou 9, qui comporte un boîtier de générateur de gaz (12) dans lequel l'ensemble (16) est au moins partiellement reçu, pour lequel de préférence le boîtier de générateur de gaz (12) comporte au moins une surface d'arrêt (54) pour le montage (16).

11. Générateur de gaz (10) selon la revendication 10, **caractérisé en ce que** le boîtier du générateur de gaz (12) présente au moins une ouverture (40) dans une zone d'extrémité (14) par l'intermédiaire de laquelle l'ensemble (16) est fixé en position sur le boîtier du générateur de gaz (12), notamment pour lequel un / l'élément de verrouillage (42) du deuxième élément de support (32) s'étend à travers l'ouverture (40).

12. Générateur de gaz (10) selon l'une des revendications 10 à 11, **caractérisé en ce que** le générateur de gaz (10) est un générateur de gaz pyrotechnique, un générateur de gaz hybride, un prétensionneur de ceinture ou un actionneur, notamment pour un lève-capot ou un arceau de sécurité d'un véhicule, pour lequel le corps du générateur de gaz (12) est tubulaire ou toroïdal.

13. Procédé de fabrication d'un générateur de gaz (10) selon les revendications 10 à 12 avec les étapes suivantes :
a) Fournir un corps de générateur de gaz (12), un premier élément de support (30), un deuxième élément de support (32), d'un allumeur (24) et une douille de branchement (26),
b) Insérer l'allumeur (24) dans le premier élément de support (30) et fixer l'allumeur (24) au premier élément de support (30) pour former un groupe d'assemblage préfabriqué,
c) Insérer le groupe de montage préfabriqué dans le corps du générateur de gaz (12), de préférence au niveau d'une région d'extrémité axiale (14) du générateur de gaz (10) et fixer le groupe d'assemblage préfabriqué à une zone du premier élément de support (30) avec le boîtier de générateur de gaz (12),
d) Insérer le deuxième élément de support (32) dans le corps du générateur de gaz (12) en direction du groupe d'assemblage préfabriqué et fixer le deuxième élément de support (32) au corps de générateur de gaz (12) ou au premier élément de support (30).
e) Insérer la douille de branchement (26) dans le deuxième élément de support (32) ou par surmoulage de la douille de branchement (26) dans le deuxième élément de support (32).

14. Procédé de réalisation d'un générateur de gaz (10) selon la revendication 13, **caractérisé en ce que** le moulage par injection de la douille de branchement (26) sur le deuxième élément de support (32) comprend une injection d'un élément de mise à la terre (58) dans la douille de branchement (26) dans le même processus d'injection et la mise en contact de l'élément de mise à la terre (58) avec le premier élément de support (32).
